# EUROPEAN PATENT APPLICATION

(11) **EP 2 816 014 A1**
(43) Date of publication of application: **24.12.2014**
(21) Application number: 13172796.8
(22) Date of filing: 19.06.2013
(51) Int. Cl.: C02F 1/32, C02F 1/00, C02F 103/00

(54) **UV-lamp based water treatment system**

(71) Applicant: AlfaWall Aktiebolag, 147 41 Tumba (SE)
(72) Inventor: ALVÁN, Jonas, SE-167 64 BROMMA (SE); BORIN, Per, SE-122 41 ENSKEDE (SE); NORLIN, Frida, 136 37 VENDELSÖ (SE)
(74) Representative: Alfa Laval Attorneys

(57) **Abstract**

A ballast water treatment system (1) comprising at least one treatment unit (2) which treatment unit (2) comprises a housing (5), surrounding a fluid chamber (6) in which at least one UV-lamp (3) enclosed and protected by a quartz sleeve (9) is arranged, where said fluid chamber (6) has an inlet (7) and an outlet (8) and defines a flow path between said inlet (7) and said outlet (8), for the ballast water, passing said UV-lamp (3), wherein at a distance from each UV-lamp (3) a UV-sensor (10) is arranged in the flow path or on an interior wall of the housing (5) measuring the UV-intensity from said lamp (3) as a result of actual lamp output, fouling of the quartz sleeve (9) and UV-transmittance of the ballast water, and wherein a control unit (11) is arranged to, continuously on the basis of said measured UV-intensity and a desired minimum UV-intensity, calculate a new lamp output value and to adjust the lamp output to said new lamp output value. A method for treating ballast water is described, comprising leading ballast water through a treatment unit (2) comprising a housing (5) surrounding a fluid chamber(6) in which at least one UV-lamp (3) protected by a quartz sleeve (9) is arranged between an inlet (7) for the untreated ballast water and an outlet (8) for the treated ballast water, exposing said ballast water to UV-radiation, measuring the UV-intensity from said UV-lamp (3) at a distance from said UV-lamp (3) as a result of actual UV-lamp output, fouling of said quartz sleeve (9) and UV-transmittance of the ballast water, calculating a new UV-lamp output value and adjusting the UV-lamp output to said UV-lamp output value.

## Description

### Technical Field

A ballast water treatment system comprising at least one treatment unit which treatment unit comprises a housing, surrounding a fluid chamber in which at least one UV-lamp enclosed and protected by a quartz sleeve is arranged. Said fluid chamber has an inlet and an outlet and defines a flow path between said inlet and said outlet, for the ballast water, passing said UV-lamp.

A method for treating ballast water, comprising leading ballast water through a treatment unit comprising a housing surrounding a fluid chamber in which at least one UV-lamp protected by a quartz sleeve is arranged between an inlet for the untreated ballast water and an outlet for the treated ballast water, exposing said ballast water to UV-radiation.

### Background

The use of UV-radiation to inactivate microorganisms in fluids is previously known. Such apparatus generally is constructed with a housing having an inlet for the fluid to be treated and an outlet for the treated fluid and rely on lamps arranged in the flow path of the fluid between the inlet and outlet inside the housing. It is important that all fluid flowing through the apparatus is exposed to at least a minimum dose of UV-radiation to inactivate all microorganisms.

In UV-based water treatment systems, such as ballast water treatment systems, a UV-sensor is commonly used to verify that the lamps are working. The sensor is arranged close to its corresponding lamp to monitor its performance in combination with the effects of any fouling on the lamp surface or the surface of its quartz sleeve.

The systems can also be equipped with a UV-transmittance sensor that monitors the transmittance in the water at 253.7 nm. According to standard methods for cleaning drinking water and wastewater, the UV-transmittance is monitored at 253.7 nm, probably as a result from the most common use of low pressure UV-lamp systems that emit UV-radiation at 253.7 nm only. If other wavelengths are emitted from the lamp, it is not taken into concern in the controlling of the lamp output.

The lamp power can be controlled by the input from the UV-sensor and/or the UV-transmittance sensor.

### Summary

It is an object of the invention provide an apparatus that more efficiently secure that as much as possible of the water is exposed to a minimum dose of UV-radiation and that the microorganisms therein are properly inactivated.

Thus the ballast water treatment system is characterized by that at a distance from each UV-lamp a UV-sensor is arranged in the flow path or on an interior wall of the housing measuring the UV-intensity from said lamp as a result of actual lamp output, fouling of the quartz sleeve and UV-transmittance of the ballast water, and wherein a control unit is arranged to, continuously on the basis of said measured UV-intensity and a desired minimum UV-intensity, calculate a new lamp output value and to adjust the lamp output to said new lamp output value.

Due to the placing of sensor at a typical distance from the lamp where the ballast water passes a plausible value of the UV-intensity that the ballast water is exposed to is measured. By adapting the lamp output to a minimum UV-intensity value that secures inactivation of the organisms it is possible to save energy and prolong the service time of the UV-lamp.

Said calculation is based on an equation or a representation of said equation of minimum power needed as a function of measured intensity.

Said equation is selectable depending on water type (fresh, brackish or salt water) or water biotope.

By chosing the appropriate equation for the water type and the life forms therein a better result may be reached and a more exact process may be used.

The minimum lamp output may be set at 50% of full power. The UV-sensor may be placed at a distance of 15-45 mm, preferably 30 mm from the UV-lamp.

The UV-sensor may be adapted to measure wavelengths between 100 and 400 nm.

Due to this a more accurate value of the UV-intensity may be obtained. Previously used sensors measure only at 253.7 nm even though UV-radiation of other wave-lengths also have an inactivating effect on the organisms as well.

Said method comprises further the steps of measuring the UV-intensity from said lamp at a distance from said UV-lamp as a result of actual UV-lamp output, fouling of said quartz sleeve and UV-transmittance of the ballast water, calculating a new UV-lamp output value and adjusting the UV-lamp output to said UV-lamp output value.

The system is aimed to be used for ballast water treatment but may also be used in other water treatment applications.

Still other objectives, features, aspects and advantages of the invention will appear from the following detailed description as well as from the drawings.

### Drawings

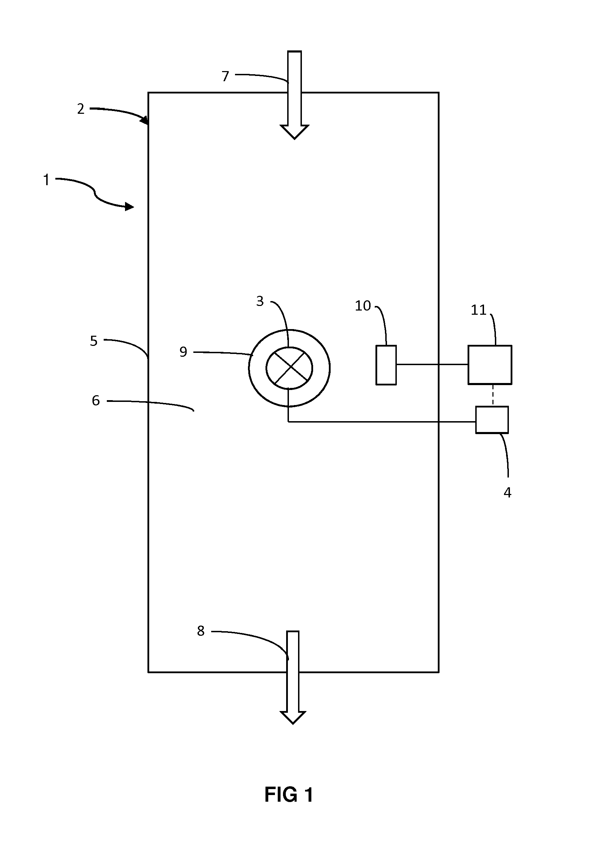

Embodiments of the invention will now be described, by way of example, with reference to the accompanying schematic drawings, in which
Fig. 1 is a schematic view of a centrifugal separator according to the invention

### Detailed Description

With reference to fig. 1 a ballast water treatment system 1 is illustrated schematically. The ballast water treatment system comprises a treatment unit 2 which in turn comprises a UV-lamp 3 and a lamp driver 4 for the UV-lamp 3. The treatment unit 2 comprises a housing 5 surrounding a fluid chamber 6 in which the UV-lamp 3 supplying UV-radiation to the fluid to be treated, is arranged between an inlet 7 for the fluid to be treated into the fluid chamber 6 and an outlet 8 for the treated fluid out of the fluid chamber 6. The UV-lamp 3 is protected by a surrounding quartz sleeve 9.

The treatment unit 2 further comprises a UV-sensor 10 arranged at a distance from the UV-lamp 3 measuring the intensity from the UV-lamp 3. The distance may be a typical average distance from the surface of the UV-lamp 3 or its protecting quartz sleeve 8 at which the fluid to be treated is passing. The UV-sensor 5 is adapted to measure UV-radiation at wavelengths between e.g. 100-400 nm in order to function with a wide range of UV-sources and is thereby not only affected by the measured UV-transmittance at 253.7 nm, thus getting a more adequate result as not only UV-radiation of 253.7 nm affects the particles and/or the organisms concerned. By placing the UV-sensor 5 measuring the intensity from the UV-lamp 3 at a distance from the UV-lamp 3 that is rather long, typically 30 mm, the UV-sensor measures the actual irradiation the particles/organisms in the fluid to be treated will receive as a result of the UV-lamp 3 output, fouling of the quartz sleeve 9 and UV-transmittance of the water.

The treatment system 1 further comprises a control unit 11 being responsive to signals from the UV-sensor 10 by adjusting the UV-lamp output and/or the flow of the fluid to be treated.

A minimum value of the UV-sensor 5 may be set, under which the control unit 11 or UV-sensor 5 warns if the UV-intensity is too low to secure that the UV-dose is high enough to sufficiently sterilize the water. The UV-lamp power can be adjusted to minimize the power consumption as long as the particles in the water are exposed to the same UV-dose and distribution of UV-dose. The set minimum value is not the same at different UV-transmittances. Instead a control curve may be used based on the calculated mean UV-dose for different UV-transmittances, e.g. by CFD (Computational Fluid Dynamics). Different curves could be used for freshwater, brackish water and sea water (salt water) to obtain the best results. If the life-forms in the water to be treated are known an adjusted curve may be used to ascertain that organisms that are difficult to inactivate get a UV-dose large enough. The curves which typically are non-linear could be approximated to linear to be easier to implement, in such a way that no point on the linear curve have a lower UV-intensity than the calculated. The equation of the curve is used as an input in the control system 11 to calculate needed power to the UV-lamp.

Even if it is not described in relation to fig. 1 most treatment units 2 comprise more than one UV-lamp 3. Each UV-lamp 3 then has its own UV-sensor 10 measuring the irradiation from that particular UV-lamp 3.

At start-up, the UV-lamps 3 always run at 100% power and may run at 100% for ca 2 minutes. By reading the current power and the UV-sensor value, a new power set point can be calculated in accordance with the control curve and the controlling software can thereby actuate the lamp driver 4 to adjust the power. New measurements are performed of the current power and UV-sensor input and the control unit 11. If the UV-intensity is still too low when the lamp power is 100% the control unit 11 initiates an alarm, alerting an operator to check the system, including lamp function, lamp age or need of CIP (cleaning) operation or combinations thereof.

## Claims

1. A ballast water treatment system (1) comprising at least one treatment unit (2) which treatment unit (2) comprises a housing (5), surrounding a fluid chamber (6) in which at least one UV-lamp (3) enclosed and protected by a quartz sleeve (9) is arranged, where said fluid chamber (6) has an inlet (7) and an outlet (8) and defines a flow path between said inlet (7) and said outlet (8), for the ballast water, passing said UV-lamp (3), wherein at a distance from each UV-lamp (3) a UV-sensor (10) is arranged in the flow path or on an interior wall of the housing (5) measuring the UV-intensity from said lamp (3) as a result of actual lamp output, fouling of the quartz sleeve (9) and UV-transmittance of the ballast water, and wherein a control unit (11) is arranged to, continuously on the basis of said measured UV-intensity and a desired minimum UV-intensity, calculate a new UV-lamp output value and to adjust the UV-lamp output to said new UV-lamp output value.

2. A ballast water treatment system (1) according to claim 1, wherein said calculation is based on an equation or a representation of said equation of minimum power needed as a function of measured intensity.

3. A ballast water treatment system (1) according to claim 2, wherein said equation is selectable depending on water type, fresh, brackish or salt water, or water biotope.

4. A ballast water treatment system (1) according to claim 2, wherein the minimum lamp output is 50% of full power.

5. A ballast water treatment system (1) according to claim 1, wherein the UV-sensor (10) is placed at a distance of 15-45 mm from the UV-lamp (3).

6. A ballast water treatment system (1) according to any one of claims 1-5, wherein the UV-sensor (10) is adapted to measure wavelengths between 100 and 400 nm.

7. Method for treating ballast water, comprising leading ballast water through a treatment unit (2) comprising a housing (5) surrounding a fluid chamber (6) in which at least one UV-lamp (3) protected by a quartz sleeve (9) is arranged between an inlet (7) for the untreated ballast water and an outlet (8) for the treated ballast water, exposing said ballast water to UV-radiation, measuring the UV-intensity from said UV-lamp (3) at a distance from said UV-lamp (3) as a result of actual UV-lamp output, fouling of said quartz sleeve (9) and UV-transmittance of the ballast water, calculating a new UV-lamp output value and adjusting the UV-lamp output to said UV-lamp output value.

8. Method for treating ballast water according to claim 7, further comprising initiating of an alarm if said UV-intensity underpasses a minimum value.
